# EUROPEAN PATENT SPECIFICATION

(11) **EP 0 856 015 B1**
(45) Date of publication and mention of the grant of the patent: **08.12.1999**
(21) Application number: 96934676.6
(22) Date of filing: 14.10.1996
(51) Int. Cl.: C08F 20/58, C07C 233/20, G01N 27/447

(54) **NEW POLYACRYLAMIDE MATRICES IN ELECTROPHORETIC AND CHROMATOGRAPHIC TECHNIQUES**
NEUE POLYACRYLAMID MATRIZEN FÜR ELEKTROPHORESE UND CHROMATOGRAPHIE
FORMULATIONS NOUVELLES DE MATRICES POLYACRYLAMIDES DANS DES TECHNIQUES D'ELECTROPHORESE ET DE CHROMATOGRAPHIE

(30) Priority: 18.10.1995 IT MI952144
(43) Date of publication of application: 05.08.1998
(73) Proprietor: RIGHETTI, Pier Giorgio, 20129 Milano (IT)
(72) Inventor: RIGHETTI, Pier Giorgio, 20129 Milano (IT)
(74) Representative: Bianchetti, Giuseppe, Prof.
(86) International application number: EP9604463
(87) International publication number: WO9716462

(56) References cited:
- WO-A-89/08099
- WO-A-93/11174
- GB-A- 1 317 858
- KOBUNSHI RONBUNSHU, vol. 47, no. 6, 1990, JAPAN, pages 467-474, XP002027916 S. ITO: "Phase transition of aqueous solutions of poly(n-alkoxyalkylacrylamide) derivatives-Effects of side chain structure."
- DATABASE "REGISTRY (CHEMICAL ABSTRACTS)" (HOST: STN), Registry Number 85092-21-3, Colombus, OH, USA; & N. OGATA: "Studies on active transport membranes", Kenkyu XP002027920
- DIE MAKROMOLEKULARE CHEMIE, vol. 190, 1989, pages 313-326, XP002027917 J. TOUET ET AL.: "Synthèse et copolymerisation d'acrylamides comportant le groupement dihydroxyphosphoryloxyalkyle."
- MACROMOLECULES, vol. 29, 1 January 1996, pages 313-319, XP002027918 N. SAITO ET AL.: "synthesis and hydrophilicity of multifunctionally hydroxylated poly(acrylamides)"
- ELECTROPHORESIS, vol. 15, 1994, pages 177-186, XP002027919 M. CHIARI ET AL.: "Towards new formulations for polyacrylamide matrices: N-acryloylaminoethoxyethanol, a novel monomer combining high hydrophilicity with extreme electrolytic stability" cited in the application

## Description

The present invention refers to novel polyacrylamide matrices, which present the following properties:
a) extreme resistance to alkaline hydrolysis;
b) good resistance to acid hydrolysis;
c) high hydrophilicity, impeding hydrophobic interaction with macromolecules;
d) higher porosity (either due to the use of monomers with higher molecular mass, or due to the use of laterally-aggregating agents).

Matrices possessing the above characteristics are obtained according to the present invention by polymerization or co-polymerization of N-mono- or di-substituted acrylamides, according to methods also covered by the present invention. Included in the present invention are also matrices obtained with mixtures of polymers (or co-polymers) of the above acrylamide monomers, or with mixtures of said polymers or co-polymers with agarose.

Additionally, the following subjects are described in the present invention:
a) new preparation of monomers (in particular 3-(N-acryloyl)-amino-1-propanol, AAP and 4-(N-acryloyl)amino-1-butanol, AAB), at sub-zero temperatures, in aprotic solvents, in very high yields (>98%) coupled to very high product purity (>98);
b) a novel method of production of short-chain poly(AAP) and poly(AAB), coupling chain transfer agents (e.g., isopropanol) to high temperatures;
c) a novel method for coating fused silica capillaries, consisting in substituting the bifunctional agent Bind Silane with the reagent acryloyl chloride, which serves as an anchoring agent of poly(AAP) [or(poly(AAB)] chains to the capillary wall.

Polyacrylamide matrices, for separations by zone electrophoresis, were introduced already in 1959 by Raymond and Weintraub (Science 130, 1959, 711-712) and subsequently promoted for disc electrophoresis by Davis *(Ann. N.Y. Acad. Sci.* 121, *1964,* 404-427), Ornstein *(Ann. N.Y. Acad. Sci.* 121, 1964, 321-349) e Hjertén (J. *Chromatogr.* 11, 1963, 66-70). Their popularity as electrophoretic supports stems from some fundamental properties, such as: a) optical transparency, including the ultraviolet; b) electrical neutrality, due to the absence of charged groups; c) possibility of synthesizing gels in a wide interval of porosities. During the years, the couple of monomers which has attained the greatest popularity has been acrylamide coupled to a cross-linkers, N,N'-methylene bisacrylamide (P.G. Righetti, J. *Biochem. Biophys. Methods 19, 1989,* 1-20). However, several defects of such a matrix have been noticed upon prolonged use. The most dramatic drawback is its instability at alkaline pH values: after an electrophoretic run (most electrokinetic separations occur at alkaline pHs for both proteins and nucleic acids), the dangling amido bonds are partly hydrolyzed, originating carboxylic groups, which stay covalently bound to the polymer, which is thus transformed into a polyacrylate. This phenomenon generates strong electroendo-osmosis, with matrix swelling and considerable distortions. In practice, after only a single electrophoretic run, the polyacrylamide matrix cannot be re-used. This strongly limits its use in large-scale projects, such as the sequencing of the human genome, where the availability of re-usable matrices would greatly shorten the analysis time and allow for a quick progress of such a project around the world. Stable matrices would be also quite useful in capillary zone electrophoresis (CZE), where the gel cannot be extruded form the capillary when partially hydrolyzed or malfunctioning.

Another common problem is the limited range of molecular sizes which can be efficiently sieved by polyacrylamides. Such porosity range encompasses pore sizes from a few (2-3 nm) to ca. 20-30 nm in highly diluted matrices. This limits the use of polyacrylamides to protein separations, whereas agarose gels are today almost exclusively used for separation of nucleic acid fragments. Highly porous polyacrylamide matrices would thus allow fractionation also of nucleic acids in some intervals of length.

A third problem is the limited hydrophilicity of the monomers currently under use (the couple acrylamide/N,N'-methylene bisacrylamide): the production of monomers having higher hydrophilicity would allow an optimal use of such matrices, especially in protein separations, where hydrophobic interactions often produce irreversible adsorption of such macromolecules.

In recent times, several groups have proposed novel monomers which might obviate some of these problems. Thus Boschetti (in: Dean P.D.G., Johnson, W.S. e Middle, F.A., eds., *Affinity Chromatography,* IRL Press, Oxford 1985, pp. 11-15) has proposed the use of Trisacryl (N-acryloyl-2-amino-2-hydroxymethyl-1,3 propandiol) has a novel monomer for producing chromatographic matrices either neutral or ion-exchangers (e.g., carboxymethyl-, diethyl amino ethyl Trisacryl). This monomer offered two distinct advantages: extreme hydrophilicity, coupled with more porous gels, due to the higher molecular mass of trisacryl. Notwithstanding these advantages, Trisacryl was found to be tinted by a fundamental defect: at alkaline pH values, it degrades with zero-order kinetics (C. Gelfi, P. De Besi, A. Alloni e P.G. Righetti, *J. Chromatogr. 608, 1992,* 333-341), which impedes its use as an electrophoretic matrix. As an alternative to this monomer, Kozulic (European Patent No. 88.10717.4, 1988) has proposed acrylamido sugars (e.g., N-acryloyl (or methacryloyl)-1-amino-1-deoxy-D-glucitol or the analogous derivative with D-xylitol. However, acrylamido sugars have the same advantages and disadvantages of Trisacryl: extreme hydrophilicity and high porosity as a polymeric matrix, but zero-order degradation kinetics of the monomers at alkaline pH. In fact also this class of compounds has found no applications in electrophoresis and chromatography.

In another application (Shorr, R. and Jain, T., European Patent No. 89107791.9, April-28-1989 publication nr 339678) a broad class of N-mono- and di-substituted acrylamido monomers has been proposed as electrophoretic support media. However, out of this vast class of potential monomers, Shorr and Jain have enucleated (and commercialized) only two preferred mixtures, as follows (verbatim quotation): "in one preferred embodiment, the polymers are formed by cross-linking polymerization of N,N-dimethylacrylamide with ethylenglycol methacrylate. In another preferred embodiment, the polymers are formed by cross-linking polymerization of N,N-dimethylacrylamide and hydroxyethyl-methacrylate with N,N-dimethylacrylamide". Also these formulations do not appear to be optimal. N,N-dimethylacrylamide, and similar alkyl-substituted acrylamides, are too hydrophobic, while the various methacrylate cross-linkers are too prone to hydrolysis and hydrophobic as well. As a result of this, the commercialized product containing these formulations (Hydrolink) has to contain detergents to help in solubilizing the monomers. The corresponding emulsion often flocculates. These problems (high hydrophobicity and irreversible adsorption of proteins) have been evidence by Chiari et al. (Electrophoresis 15, 1994, 177-186). Thus, two classes of monomers have been proposed so far:
A) on the one hand, monomers (such as Trisacryl and acrylamido sugars) of extreme hydrophilicity, but highly susceptible to alkaline hydrolysis;
B) on the other hand, monomers (such as N,N-dimethylacrylamide) highly resistant to alkaline hydrolysis, but much too hydrophobic.

Thus, the fundamental problem of how to find a novel class of monomers combining both high hydrophilicity to high resistance to hydrolysis was far from being solved.

In 1991 Righetti (Italian patent No. R191 A-003271, 1991; European Patent PCT 92/0177) proposed a novel monomer which seemed to offer the solution to the above problems: N-acryloyl amino ethoxy ethanol (AAEE), a novel compound able to produce matrices [poly(AAEE)] highly hydrophilic and extremely resistant to alkaline hydrolysis. In a series of applications (e.g., Chiari et al., Electrophoresis 15, 1994, 177-186; ibid. 15, 1994, 616-622) this novel monomer has given a unique performance both in electrophoresis and in the production of chromatographic beads. However, it was noted that this new monomer had a peculiar tendency to auto-polymerize and to auto-reticulate even in the absence of cross-linker. Due to this noxious property, it was not possible to produce short-chain liquid sieving polymers, which have a widespread use in capillary zone electrophoresis (CZE), for instance in separation of DNA fragments. This tendency to auto-polymerize has been found to be due to a mechanism of "1-6 abstraction", which provokes the formation of free radicals on both C₂ and C₆. This abstraction (of a proton, by the C₁ at the expenses of the C₆) is favoured by the presence of the ether group (O₇) adjacent to C₆. When a critical concentration of such radicals is reached, the monomer solution spontaneously auto-polymerizes and auto-reticulates.

In the present invention, novel matrices are proposed which obviate to the above problems, based on monomers possessing:
a) high hydrophilicity;
b) very high resistance to hydrolysis;
c) resistance to auto-polymerization, as exemplified by the "1-6 abstraction".

This class of monomers offers results in electrokinetic and chromatographic separations decidedly superior, as shown below.

Such formulations are obtained via polymerization or co-polymerization of monomers having the following formula (I): 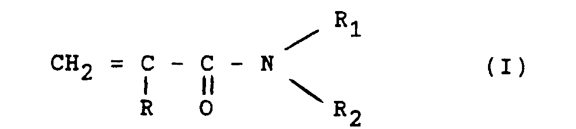 in which R represents hydrogen or CH₃ and R₁ and R₂, independently between them, represent hydrogen, or a group of formula -[(CH₂)ₙO]ₚ-H, where n=3 or >3 and p=1, with with the proviso that at least one, between R₁ and R₂, should be different from hydrogen, or by co-polymerization of monomers of type (I) with other (meth)acrylamides. The preferred monomers of formula (I) are 3-(N-acryloyl)amino-1-propanol (AAP) and 4-(N-acryloyl)amino-1-butanol (AAB) or their di-substituted monomers 3-[N-(3-hydroxypropyl)-N-(acryloyl)]amino-1-propanol and 4-[N-(4-hydroxypropyl)-N-(acryloyl)]amino-1-butanol. In particular the polymers (or copolymers) formed with AAP and AAB offer the desired characteristics of good hydrophilicity, very high resistance to hydrolysis and increased porosity. These characteristics are to be found also in mixed bed formulations (e.g., agarose/polyacrylamide matrices obtained with the AAP and AAB monomers).

The invention includes also synthetic procedures for obtaining said monomers at high yields (>98%) and at high purity (>98%), as well as polymerization processes yielding short-chain poly(AAP) and poly(AAB), both for filling capillaries and for mixing to agarose and polyacrylamide matrices. The invention extends also to the use of the novel AAP and AAB monomers for preparing gel slabs for long storage and for preparing chromatographic beads to be employed in all chromatographic and electrokinetic processes for industrial applications as well as for research and analytical purposes. Also included in the present invention are methods for producing matrices of poly(AAP) and poly(AAB) laterally-aggregated (with the help of pre-formed polymers in solution) and thus macroporous, as well photopolymerization methods already applied in the previous patent application (P.G. Righetti, Italian patent No. R191 A-003271) for poly(AAEE) matrices.

The advantages of the present matrices, as compared to the ones reported up to date, are reported below.

Mono- and di-N-substituted polyacrylamide matrices

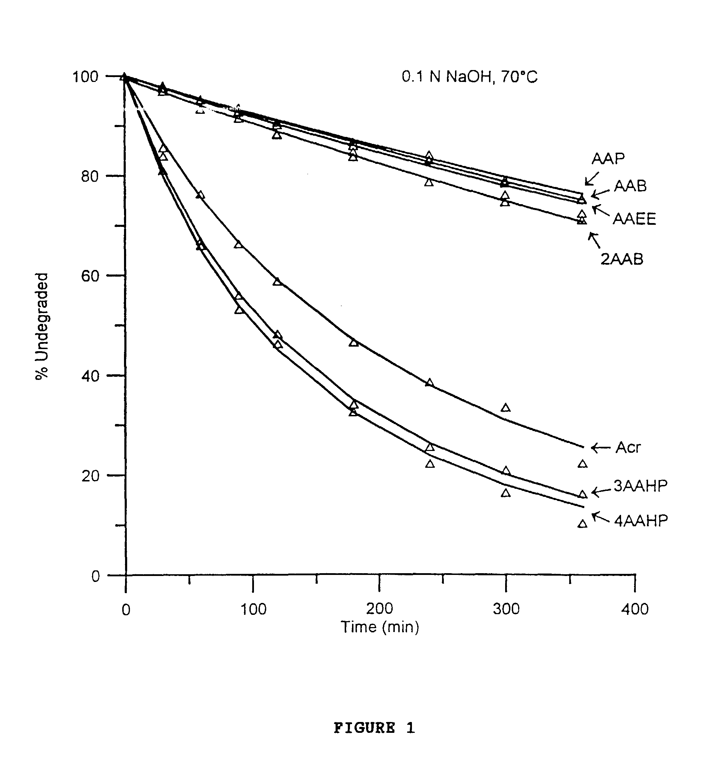

The example of Fig. 1 shows the hydrolysis kinetics of standard acrylamide and N-mono- and di-substituted acrylamides. The free monomers, dissolved in 0.1N NaOH, were incubated at 70°C for the times indicated, then neutralized and analyzed by capillary electrophoresis with mandelic acid as an internal standard. Peak integration was obtained with the Beckman System Gold. It is seen that all monomers exhibit first-order degradation kinetics, except for trisacryl, which degrades with zero-order kinetics, thus demonstrating an intrinsic stability associated with this type of structure. Among the N-substituted acrylamides, which theoretically should be more stable than acrylamide, N-acryloyl morpholine shows, on the contrary, a more rapid degradation kinetic. The novel monomer here proposed, although degrading too with first order kinetics, shows a hydrolysis constant (K=0.008 L mol⁻¹ min⁻¹) 8 times smaller than that of acrylamide (K=0.05 L mol⁻¹ min⁻¹).

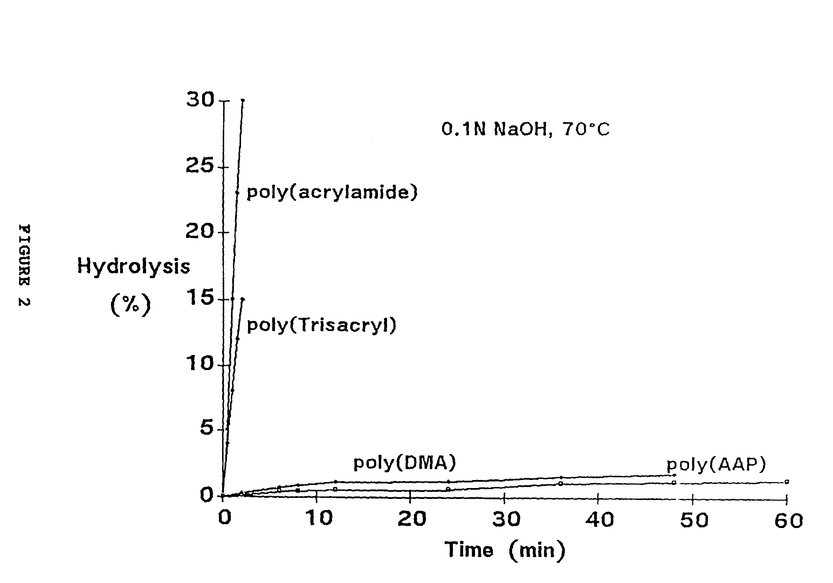

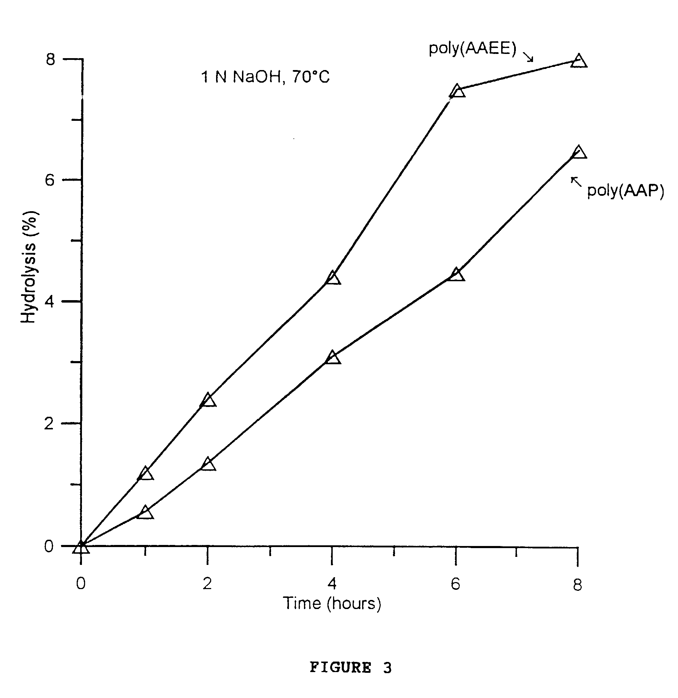

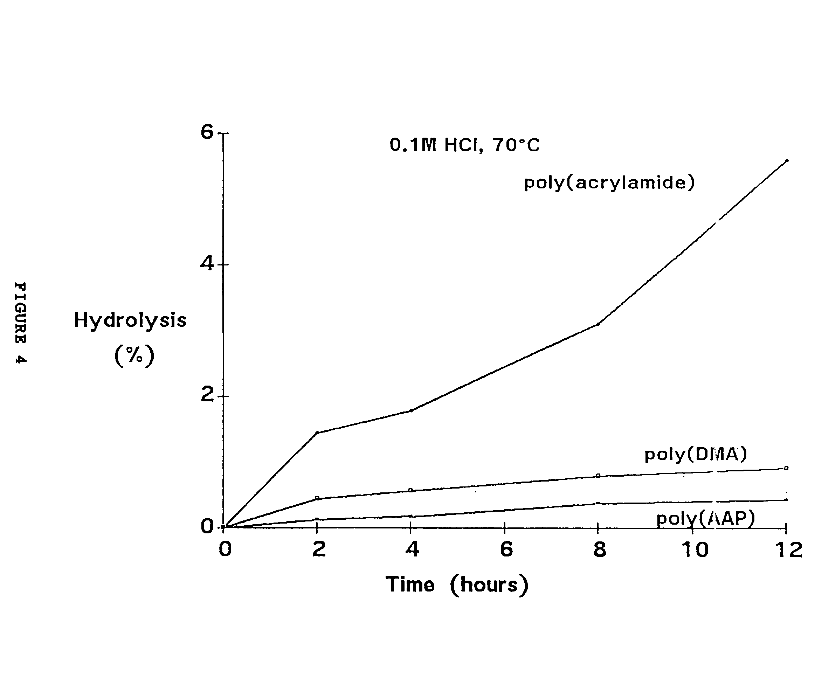

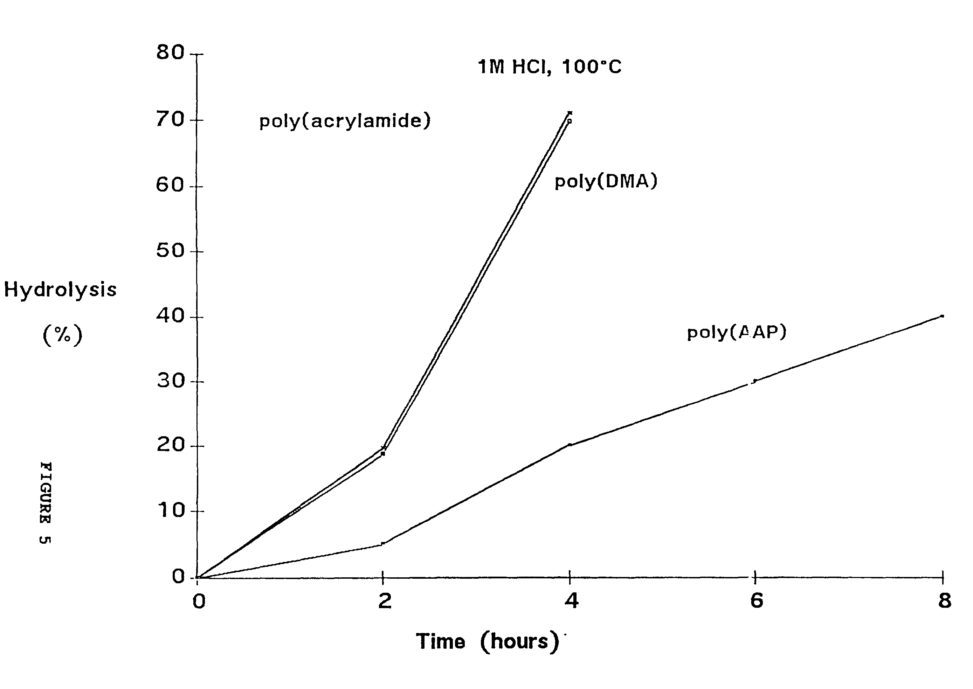

The difference in stability is even more pronounced if the monomers, instead of being free in solution, are incorporated into a polymer matrix. In the example of Fig. 2, the stability of standard and substituted acrylamides is compared when incorporated into polymer beads. After hydrolysis in 0.1N NaOH for the times indicated, the hydrolysis of the polymer is measured by direct titration of the free carboxyls liberated. It is seen that, in the case of poly(acrylamide) 30% of the amid groups are hydrolyzed in only 2 hours of incubation, and 15% in the case of poly(Trisacryl). On the contrary, the two matrices formed with N-substituted monomers, poly(dimethyl acrylamide) and poly(AAP) exhibit extreme resistance to hydrolysis: the first degrades by only 1.5% in 48 hours, whereas poly(AAP) reaches this extent of hydrolysis (1.5%) in 60 hours of hydrolysis. The excellent behaviour of poly(AAP) is also shown under drastic hydrolysis conditions (1 N NaOH, 100°C): in 8 hours, the extent of hydrolysis was only 6.5%, vs. 8% in the case of poly(AAEE) (Fig. 3). Under these conditions, a poly(acrylamide) gel quickly disintegrated. The very high resistance of the poly(AAP) monomer is also shown under acidic conditions: in 0.1 N HCl at 70°C (Fig. 4) the hydrolysis is only 0.5% in 12 hours, vs. 1% for poly(DMA) and 6% for poly(acrylamide). Under drastic conditions (1 N HCl, 100°C) the differences are even more pronounced: 40% hydrolysis for poly(AAP) in 8 hours, vs. 70% in only 4 hours for both poly(DMA) and poly(acrylamide) (Fig. 5).

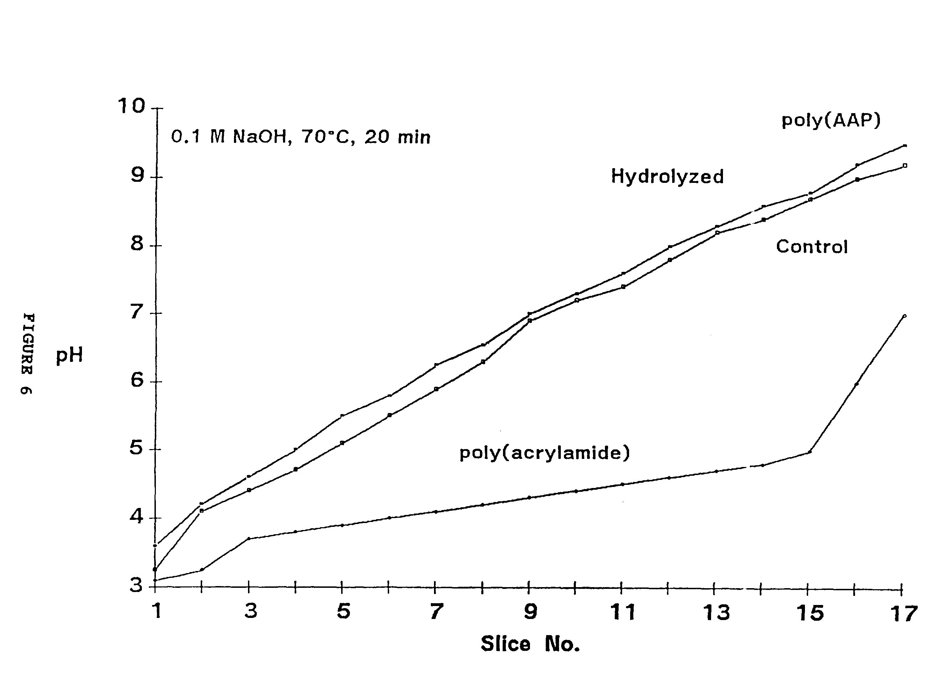

In the example of Fig. 6, the resistance to hydrolysis of poly(AAP) is demonstrated in an isoelectric focusing (IEF) experiment. Two gel slabs, one of poly(acrylamide) and one of poly(AAP) are prepared and incubated in 0.1 N NaOH at 70°C for 20 min. After washing for eliminating excess NaOH, the gels are dried and reswollen in 2% Ampholine pH 3-10. After IEF, the pH gradient between anode and cathode is measured on gel slices at 5 mm increments. It is seen that in poly(AAP) gels the pH gradient is unaffected by the NaOH treatment, whereas in poly(acrylamide) gels the pH gradient is completely acidified. This last phenomenon is to be attributed to the presence of free carboxyls (pK 4.6, responsible for the acidification of the pH gradient and for a strong electrosmotic flow (P.G. Righetti, *Isoelectric Focusing: Theory, Methodology and Applications,* Elsevier, Amsterdam, 1983). Whereas also poly(DMA) matrices exhibit the same behaviour of poly(AAP), the former cannot be used in any electrophoretic separation of proteins, due to their strong hydrophobicity (see below).

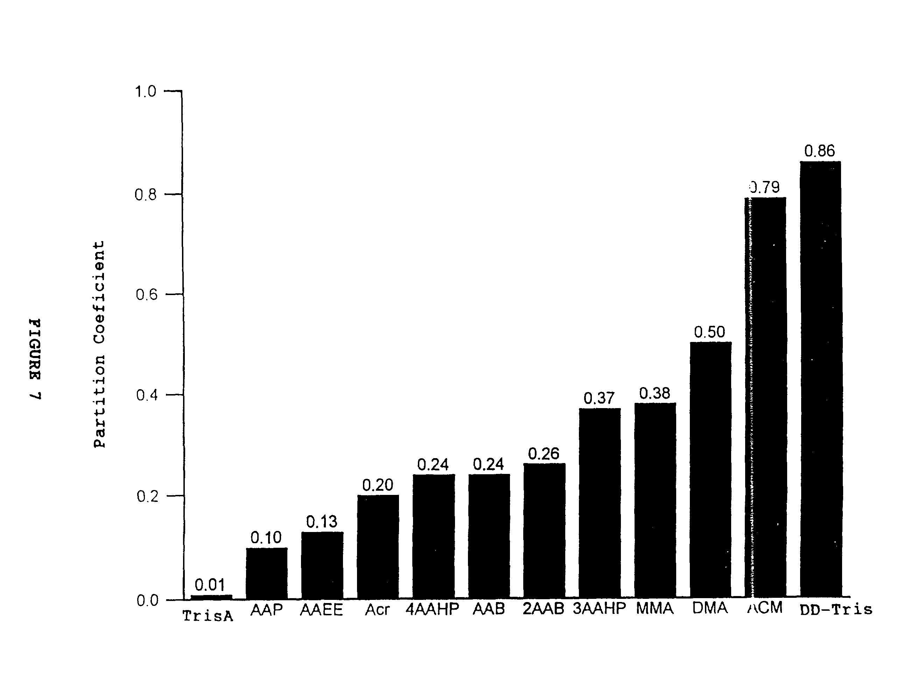

While we have seen that, from a point of view of resistance to hydrolysis, both poly(AAP) and poly(DMA) exhibit a unique stability, we still have to demonstrate their relative characteristics of hydrophilicity, a most wanted property for separation of macromolecules. To that aim, aqueous solutions of these monomers have been subjected to partitioning against n-octanol. After partitioning, the aqueous phase is analyzed by capillary electrophoresis and the molar ratio of the various monomers in the two phases determined. Fig. 7 shows the various partition coefficients P: it is seen that Trisacryl is by far the most hydrophilic molecule, whereas other N-substituted acrylamides are more hydrophobic. However, the P value of AAP is excellent, since it is twice as hydrophilic as acrylamide. Also AAB has a hydrophilicity close to that of acrylamide (P=0.24). The maximum value of P for obtaining a hydrophilic gel cannot be much greater than P=0.3: above this value, the polymer exhibits hydrophobic interactions with proteins and, above P=0.5, the polymer cannot any longer reswell in protic solvents. Thus a poly(DMA) matrix, although exhibiting unique resistance to hydrolysis, cannot be proposed for separation of macromolecules, due to its high hydrophobicity.

Such matrices, resistant to hydrolysis and hydrophilic, are also very useful for coating the fused silica wall of capillaries in CZE for suppressing the electrosmotic flow (EEO). Quenching of EEO is fundamental in capillary IEF, since the pH gradient would be destroyed by the charges on the wall, and for separation of macromolecules, since proteins would be strongly adsorbed to ionized silanols. One of the most popular coatings is the one proposed by Hjertén *(J. Chromatogr.* 347, 1985, 191-198): the capillary is treated with a bifunctional agent (e.g., Bind Silane, 3-methacryloxypropyl trimethoxy silane), to which polyacrylamide strings (in the absence of cross-linker) are covalently bound. However, such a coating is very sensitive to an alkaline milieu: when performing IEF, the EEO flux appears already after 5 runs. On the contrary, if the capillary is coated with linear poly(AAP) chains, the EEO flow is still not appreciable after 30 runs. The link between the fused silica wall and Bind Silane is of the type -Si-O-Si-, which is also unstable to alkaline conditions. An alternative is to use the method of Cobb et al. (Anal. Chem. 62, 1990, 2478-2483), which utilizes a Grignard reagent to form a direct Si-C= link between the silica wall and the bifunctional agent. With this last method, and with a poly(acrylamide) coating, the stability of the coating increases only from 5 to 10 runs, due to the instability of the acrylamide monomer. On the contrary, when this cross-linker is coupled to poly(AAP) coating, the EEO flux is still not appreciable after 100 runs.

Part of the present invention is also a new method of anchoring the polymer to the silica wall, while avoiding agents of the Bind Silane type, which not only form an unstable -Si-O-Si- link, but also generate, by hydrolysis of the tri-methoxy moiety, additional free silanols which further contribute to the EEO flow. An alternate method is to attach to the wall acryloyl chloride, thus forming an ester bond with the Si of the wall: this link is more stable than the siloxane bridge; additionally, this reagent, being monofunctional, does not produce free silanols upon binding to the wall. If to this acryloyl residue, reacted with the wall, poly(AAP) [or poly(AAB)] strings are attached, the coating is stable also for >100 electrophoretic runs.

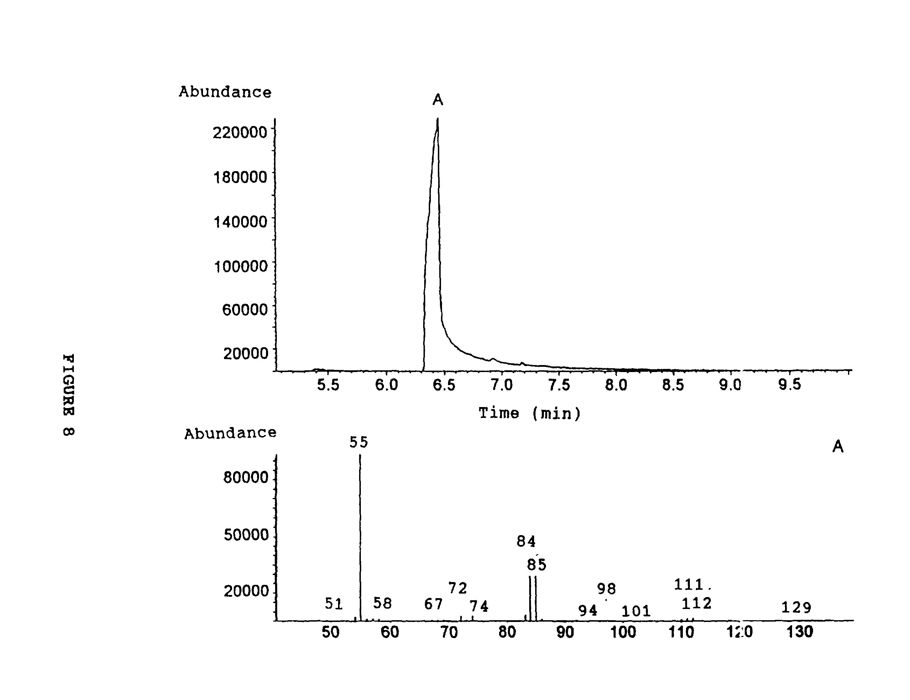

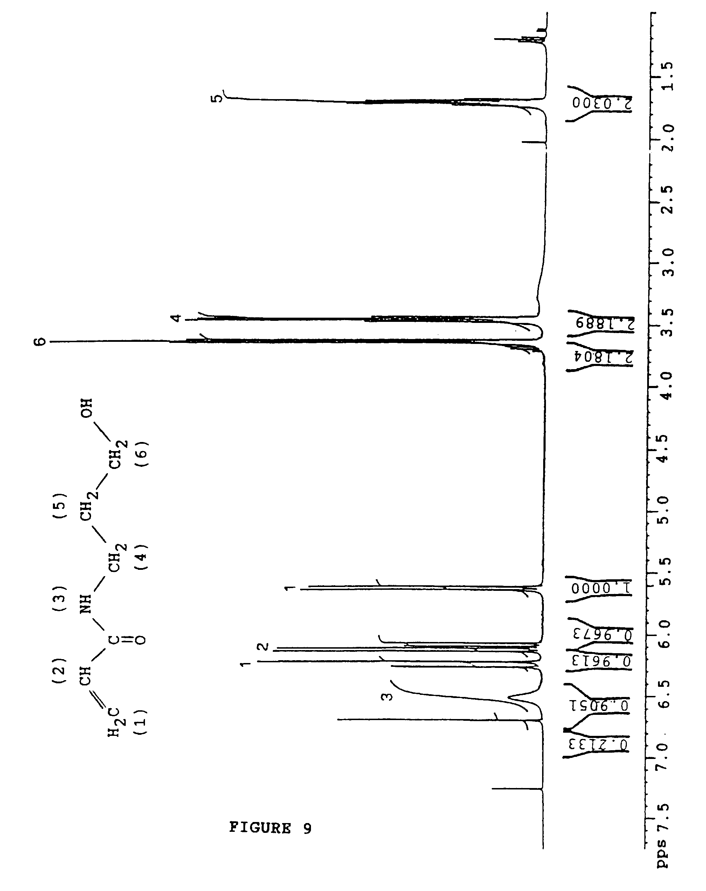

It is part of the present invention also a new method for synthesizing AAP (or AAB), able to produce, in a single synthetic step, an essentially pure product (>98%) with equivalent yields (>98%). The synthetic method proposed by us in the previous patent on AAEE consisted in a standard Schotten-Baumann reaction (acryloyl chloride admixed with amino ethoxy ethanol in 2 N NaOH at 0-5°C in aqueous solvent). This reaction had very low yields (15%) and a high degree of contamination from free acrylic acid. In the present invention, a new synthetic approach is described, by which acryloyl chloride and amino propanol (or amino butanol) are reacted at -30°C till -70°C, preferably at -40°C, in absolute ethanol and in a 2X molar excess of amino propanol (or amino butanol), instead of triethyl amine or NaOH, for neutralizing the HCl produced in the condensation reaction. The product thus obtained (Fig. 8) is pure by gas-chromatographic analysis (upper panel). Mass spectra (Fig. 8, lower panel) confirmed the product identity, as also proven by NMR spectra (Fig. 9).

It is also part of the present invention the production of short-chain poly(AAP) [or poly(AAB)] for sieving proteins and nucleic acids in CZE or as additives in agarose and poly(acrylamide) matrices, for modulating the porosity of said matrices. The production of short-chain polymers is extremely useful for filling and emptying capillaries, due to the low viscosity of such chains, and also for greatly improving the sieving of smaller size nucleic acids (e.g., oligonucleotides and DNA fragments from 100 to 500 bp). The synthesis of such chains occurs by a simultaneous treatment with high temperatures (60-70°C) and with chain transfer additives, such as 2-propanol. This synthesis has never been possible with the AAEE monomer, since, during this process, auto-reticulation and gel formation occurred.

### Example No. 1

*Synthesis of 3-(N-acryloyl)amino-1-propanol.* In a 3-necked flask, equipped with a thermometer, a funnel and an Argon flushing tube, 0.1 M acryloyl chloride are added. After refrigerating at -40°C, 150 mL of absolute ethanol, also kept at -40°C, are added. 0.2M 3-amino-1-propanol, dissolved in ethanol, is then added dropwise while keeping the temperature at -45 to -40°C. Stirring is continued, after the last addition, for two hours at -40°C and then for additional 5 hrs at 5°C. The solvent is evaporated and the residue dissolved in acetone. After eliminating the propanol amine chloridrate by filtration, the monomer solution is passed on a silica column (1:30 ratio product/silica), developed with acetone. The eluent is evaporated at 0°C with a mechanical pump. The pure product (98% yield) is dissolved in water (1:1 ratio, v/v) and analyzed by gas chromatography mass spectra (Fig. 8) and by NMR (Fig. 9). The use of other solvents in this synthesis (e.g., methanol, acetone, chloroform) as well as of other amines (e.g., triethyl amine) generates lower yields and a number of different contaminating products.

### Example No. 2

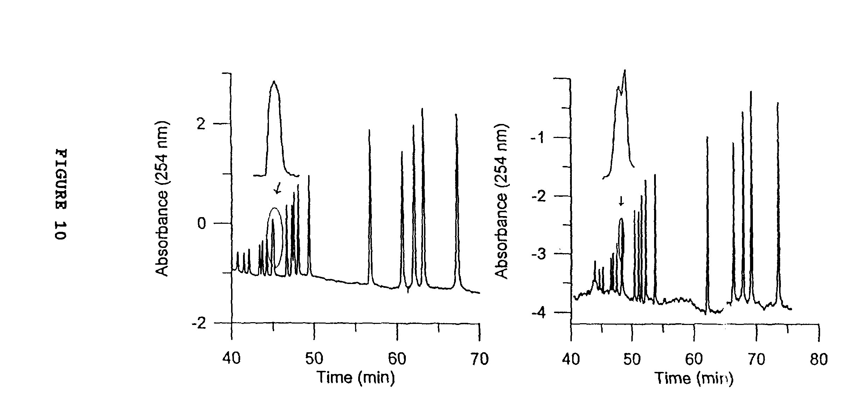

*Synthesis of short-chain poly(AAP).* Short-chain poly(AAP) was synthesized in presence of 2-propanol at high temperatures, in order to control the molecular mass of the product. Ten percent AAP is prepared in water containing 3% 2-propanol. The solution is degassed and then equilibrated under Argon. After adding catalysts (10 µL of 10% ammonium persulphate and 1 µL of pure TEMED per mL of gelling solution), polymerization is allowed to proceed for 2 hrs at 70°C in a thermostatic bath. The polymer is precipitated with ethanol, washed and lyophilized. For using it in CZE for DNA fragment separation, 6% to 10% polymer is dissolved in standard TBE buffer (89 mM Tris, 89 mM borate and 2 mM EDTA, pH 8.3). Its analysis on molecular sieves has given a Mw value of ca. 200000 Da, as opposed to >2 million Da for the same polymer prepared under standard conditions. Fig. 10 shows the separation of marker V (DNA fragments from 18 to 500 bp) in TBE buffer in presence of 8% short-chain poly(AAP): one can notice the separation between the 123 and 124 bp fragments, typically not obtainable with any other sieving system.

### Example No. 3

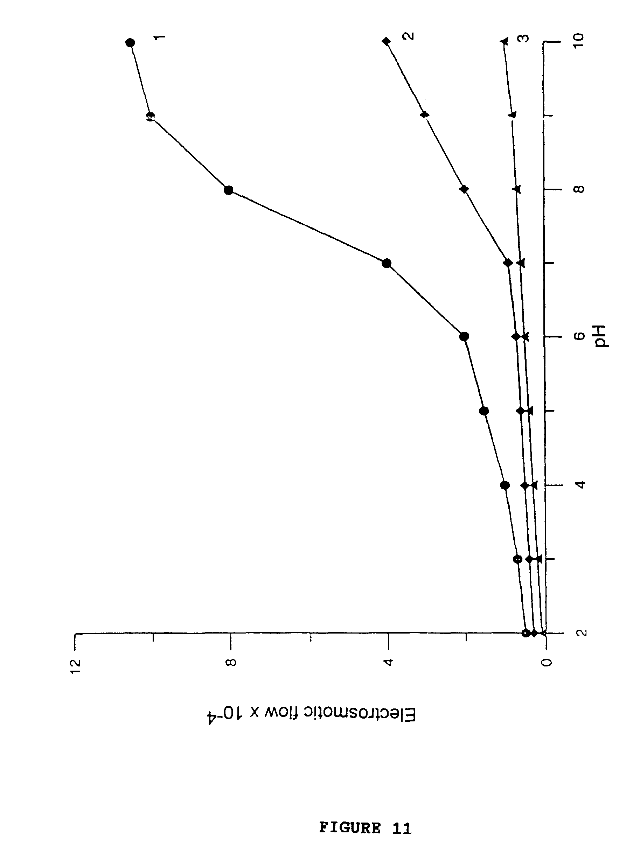

*Coating of the capillary wall.* Fused silica capillaries are first treated with warm methanolic KOH for 1 h under continuous fluxing, in order to activate the silanols. After treating with 1 N HCl for 10 min and several washing steps with water, then with acetone, the capillary is dried in the oven at 170°C while flushing with nitrogen. The capillary is subsequently treated for ten cycles first with anhydrous triethylamine (5 min, while flushing) then with acryloyl chloride (5 min, under flushing). After these treatments, the capillary is filled with a solution of 5% AAP monomer (in the absence of cross-linker), previously degassed and added with TEMED and persulphate, as described above. Polymerization occurs at low temperatures (10°C, in order to favour growth of long-chain polymer) and at controlled pH (pH 7, in order to avoid hydrolytic processes during the coating) overnight. The capillary is emptied by pressure, flushed with water and then employed for electrophoretic separations. Fig. 11 gives the EEO of a control capillary, of a capillary coated with poly(AAP) in presence of Bind Silane and of a capillary coated with poly(AAP) with acryloyl chloride as a bifunctional agent. For these last two capillaries, the EEO is measured after 60 electrophoretic runs.

### Legends

### Figure 1

Kinetics of hydrolysis of different mono- and di-substituted monomers, as compared with unsubstituted acrylamide. Forced degradation under mild (O.1 N NaOH) alkaline conditions. Hydrolysis was assessed by quantifying the residual amount of intact monomer by capillary zone electrophoresis in presence of an internal standard. Note the excellent performance of AAP. Abbreviations: AAP = 3-(N-acryloyl)amino-1-propanol; AAB = 4-(N-acryloyl)amino-1-butanol, AAEE = 2-[2-(N-acryloyl)amino]ethoxy-ethanol; 2-AAB = 3-(N-acryloyl)amino-3-methyl-1-propanol; Acr = acrylamide; 3-AAHP = N-acryloyl-3-hydroxy-piperidine, 4-AAHP = N-acryloyl-4-hydroxy-piperidine.

### Figure 2

Hydrolysis kinetics of different monomers after incorporation in a gel matrix. Conditions: 0.1 N NaOH, 70°C, for up to 60 h. The extent of hydrolysis was evaluated by measuring the equivalents of acrylic acid liberated in the polymer beads by frontal analysis. These equivalents were then transformed into a % value of total amide groups hydrolized in the polymer. Note that there is a 500-fold difference in reactivity between poly(acrylamide) on the one side and poly(AAP) and poly(DMA) on the other side (DMA = N,N-dimethylacrylamide).

### Figure 3

Hydrolysis kinetics of poly(AAEE) and poly(AAP) under harsh alkaline conditions (1 N NaOH, 100°C). All other conditions as in Fig. 2.

### Figure 4

Hydrolysis kinetics of poly(acrylamide), poly(DMA) and poly(AAP) under mild acidic conditions (0.1 N HCl, 70°C). All other conditions as in Fig. 2.

### Figure 5

Hydrolysis kinetics of poly(acrylamide), poly(DMA) and poly(AAP) under harsh acidic conditions (1 N HCl, 100°C). All other conditions as in Fig. 2.

### Figure 6

Electrophoretic analysis of hydrolysis of poly(acrylamide) and poly(AAP) gels. Both gels were cast on a glass slab and subjected to hydrolysis in 0.1 N NaOH at 70°C for 20 min. After washing and drying, the gels were reswollen in 2% carrier ampholytes pH 3-10 and subjected to isoelectric focusing for 2 hrs at 1500 V, 4°C. The gels were then segmented into 17 pieces of 5 mm width along the migration path. The pH of each segment was measured after elution in 300 µL of 10 mM NaCl.

### Figure 7

Hydrophobicity scale of acrylamide and N-substituted derivatives. Each monomer was dissolved in aqueous solution (3.5 mL) at a concentration of 2 mM and mixed with an equal volume of n-octanol for 2 min. After phase separation, the aqueous solution is centrifuged for 75 min at 2000 rpm. All operations at 25°C. The solution, after dilution, is added with internal standard (2.5 mM of pK 9.3 Immobiline) and analyzed by CZE. For abbreviations see Fig. 1. Other abbreviations: MMA: N-(mono-methyl)acrylamide; ACM: N-acryloyl morpholine; TrisA: trisacryl; DD-Tris: dideoxy trisacryl.

### Figure 8

Identification of reaction products in the synthesis of novel N-substituted acrylamides by gas chromatography-mass spectra. Reaction conditions: -40°C, ethanol as solvent and a two-fold molar excess of propanol amine. Upper panel: GC profile; lower panel: mass spectrum of AAP. Note that only under these reaction conditions an essentially pure product is obtained.

### Figure 9

¹H-NMR spectra for identification of the desired AAP reaction product. Spectra were recorded with a Bruker AC-200 instrument by using CDCl₃ as solvent. The numbers 1-6 refer to identification of the various groups in the molecule, whose formula is given above the spectrum. The -OH group gives the smeared signal just to the right of peak 4.

### Figure 10

Capillary electrophoresis of DNA fragments (marker V). Capillaries: 75 µm I.D. (left panel) and 50 µm I.D. (right panel), 37 cm length, coated with poly(AAP). Buffer electrolyte: 89 mM Tris-borate, 2 mM EDTA, pH 8.3, containing 8% linear, short-chain poly(AAP), as sieving liquid polymer and 2.5 µM ethidium bromide. Sample injection: 15-20 s at 100 V/cm. Migration conditions: 100 V/cm, at room temperature. The insert shows the separation between fragments 123 and 124 bp, typically unresolvable in conventional poly(acrylamide).

### Figure 11

Electrosmotic flow (EEO) values in fused silica capillaries with different coatings. The upper curve represents EEO in untreated capillaries. The other two curves represent capillaries coated with poly(AAP) grafted to the wall via Bind Silane (2) or acryloyl chloride (3). The EEO flow is measured by injecting a neutral marker (acrylamide) and measuring its transit time at 10000 V and different background electrolyte pH values.

## Claims

1. Use of matrices made of poly(N-substituted)acrylamides, in electrophoretic and chromatographic methods, wherein said matrices are obtainable by (co)polymerization of monomers of formula (I): 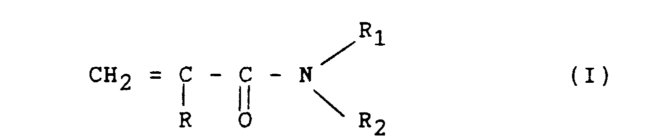 where R represents hydrogen or CH₃, while R₁ and R₂, independently among them, represent hydrogen or a group of formula -(CH₂)ₙ-OH, where n=3 or >3, with the proviso that at least one of R₁ and R₂ is different from hydrogen, or by copolymerization of said monomers with other (meth)acrylamides.

2. Use according to claim 1, wherein said matrices are obtainable by polymerization of 3-(N-acryloyl)amino-1-propanol and 4-(N-acryloyl)amino-1-butanol, or their di-substituted derivatives, 3-[N-(3-hydroxypropyl)-N-(acryloyl)]amino-1-propanol and 4-[N-(4-hydroxypropyl)-N-(acryloyl)]amino-1-butanol, or by copolymerization of said monomers with suitable hydrophilic compounds.

3. Use according to claims 1 and 2, wherein said methods comprise all electrokinetic separations, including capillary zone electrophoresis.

4. Use of monomers having formula (I) as described in claim 1, for coating the inner wall of a capillary in capillary electrophoresis, either utilizing conventional bifunctional agents forming a -Si-O-Si- bridge (e.g., 3-methacryloxypropyl trimethoxy silane), or by utilizing bifunctional agents forming a direct -Si-C= linkage, or by utilizing acryloyl chloride, either for filling a capillary, or as a cross-linked matrix, or as a viscous solution in the absence of cross linker.

5. Use according to claims 1 and 2, wherein said methods comprise all electrokinetic methodologies, including DNA sequencing, capillary zone electrophoresis, either in slabs or gel cylinders, and for determining proteins' Mr by electrophoresis in sodium dodecyl sulphate and for all isoelectric focusing methodologies, including immobilized pH gradients.

6. Use according to claims 1 and 2, wherein said matrices are obtainable by (co)polymerization in the presence of different types of hydrophilic polymers able to induce lateral aggregation and thus to form macroporous structures.

7. Use according to claim 1, wherein said matrices are characterized by using, as lateral aggregating agents, polymers of the polyethylene glycol family, in particular the 10 and 20 kDa sizes.

8. Use of matrices according to claims 6 and 7, wherein said methods comprise all types of electrophoresis on macroporous supports, including conventional isoelectric focusing and immobilized pH gradients.

9. Use according to claims 6 and 7, wherein said matrices are used as membranes for chromatographic and filtration processes, either alone or deposited onto other supporting membranes.

10. Use according to claims 6 and 7, wherein said matrices are used as isoelectric and buffering membranes to be used in multicompartment electrolyzers for protein purification, for pyrogen, nucleic acid fragments and viral particles removal from said proteins, said membranes being in general deposited onto tear-resistant supports.

11. Use according to claims 1 and 2, wherein said matrices are obtainable either by chemical or by photo(co)polymerization (e.g., with riboflavin, or with methylene blue in presence of the red-ox couple Na toluene sulphinate and diphenyliodonium chloride) of monomers having formula (I).

12. Use of acrylamides with formula (I), as described claim 1 for preparing pre-cast gel for long term storage, to be employed in all electrokinetic methodologies (including conventional IEF and immobilized pH gradients), said gel matrices being stored either in presence of solvent or dried.

13. Use of acrylamides of formula (I), as described in claim 1, for preparing chromatographic beads, either alone or as a coating of plastic or glass beads, or mixed with agarose or other polymers.

14. Matrices made of poly(N-substituted)acrylamides, to be utilized in electrophoretic and chromatographic methods, obtainable by (co)polymerization of monomers of formula (I): 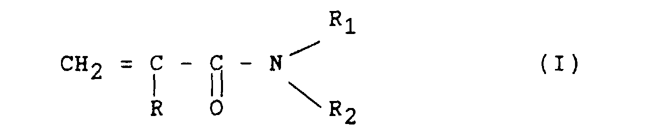 where R represents hydrogen or CH₃, while R₁ and R₂, independently among them, represent hydrogen or a group of formula -(CH₂)ₙ-OH, where n=3 or >3, with the proviso that at least one of R₁ and R₂ is different from hydrogen, or by copolymerization of said monomers with other (meth)acrylamides and with the further proviso that the monomers of formula (I) are other than 3-(N-acryloyl)amino-1-propanol and 4-(N-acryloyl)amino-1-butanol.

15. A process for the preparation of acrylamides of formula (I) according to claim 14, characterized in that (meth)acryloyl chloride and at least 2 moles of an amino alcohol of the formula 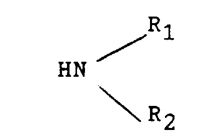 where R₁ and R₂ have the above meanings are reacted in absolute ethanol at -30°C till -70°C.

16. A process according to claim 15, wherein the reaction temperature is -40°C.

## Patentansprüche

1. Verwendung von aus Poly(N-substituierten)acrylamiden hergestellten Matrices bei elektrophoretischen und chromatographischen Methoden, wobei diese Matrices erhältlich sind durch (Co)polymerisation von Monomeren der Formel (I): 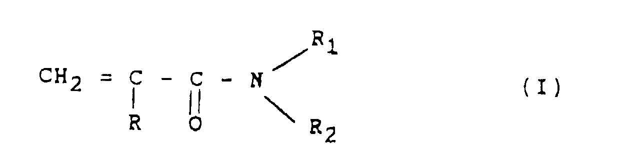 wobei R Wasserstoff oder CH₃ darstellt, während R₁ und R₂ unabhängig voneinander Wasserstoff oder eine Gruppe der Formel -(CH₂)ₙ-OH darstellen, wobei n = 3 oder > 3, unter der Voraussetzung, daß mindestens einer von R₁ und R₂ von Wasserstoff verschieden ist, oder durch Copolyrnerisation dieser Monomere mit weiteren (Meth)acrylamiden.

2. Verwendung nach Anspruch 1, wobei die Matrices erhältlich sind durch Polymerisation von 3-(N-Acryloyl)amino-1-propanol und 4-(N-Acryloyl)amino-1-butanol, oder von deren disubstituierten Derivaten, 3-[N-(3-Hydroxypropyl)-N-(acryloyl)]amino-1-propanol und 4-[N-(4-Hydroxypropyl)-N-(acryloyl)]amino-1-butanol, oder durch Copolymerisation dieser Monomere mit geeigneten hydrophilen Verbindungen.

3. Verwendung nach Ansprüchen 1 und 2, wobei die Methoden alle elektrokinetischen Trennungen, einschließlich der Kapillarzonenelektrophorese umfassen.

4. Verwendung von Monomeren mit der Formel (I) wie in Anspruch 1 beschrieben zur Beschichtung der Innenwand einer Kapillare bei der Kapillarzonenelektrophorese, entweder durch Verwendung üblicher eine -Si-O-Si-Brücke bildender bifunktioneller Mittel (z.B. 3-Methacyloxypropyltrimethoxysilan), oder durch Verwendung von eine direkte -Si-C-Bindung bildenden bifunktionellen Mitteln, oder durch Verwendung von Acryloylchlorid, entweder zum Füllen einer Kapillare, oder als vernetzte Matrix, oder als viskose Lösung in Abwesenheit von Vernetzer.

5. Verwendung nach den Ansprüchen 1 und 2, wobei die Methoden alle elektrokinetischen Methodologien umfassen, einschließlich DNA-Sequenzierung, Kapillarzonenelektrophorese, entweder in Platten oder Gelzylindern, und zur Bestimmung von Protein-Mr durch Elektrophorese in Natriumdodecylsulfat und für alle isoelektrischen Fokussierungsmethodologien, einschließlich immobilisierten pH-Gradienten.

6. Verwendung nach den Ansprüchen 1 und 2, wobei die Matrices erhältlich sind durch (Co)polymerisation in Gegenwart von verschiedenen Typen von hydrophilen Polymeren, die laterale Aggregation induzieren und so makroporöse Strukturen bilden können.

7. Verwendung nach Anspruch 1, wobei die Matrices charakterisiert sind durch Verwendung von Polymeren der Polyethylenglykolfamilie, insbesondere der Größen 10 und 20 kDa, als laterale Aggregierungsmittel.

8. Verwendung von Matrices nach den Ansprüchen 6 und 7, wobei diese Methoden alle Typen der Elektrophorese auf makroporösen Trägern umfassen, einschließlich üblichem isoelektrischem Fokussieren und immobilisierten pH-Gradienten.

9. Verwendung nach den Ansprüchen 6 und 7, wobei die Matrices als Membranen für chromatographische und Filtrations-Prozesse verwendet werden, entweder allein oder auf anderen Trägermembranen aufgebracht.

10. Verwendung nach den Ansprüchen 6 und 7, wobei die Matrices als isoelektrische und puffernde Membranen verwendet werden, die in Multikompartment-Elektrolysatoren zur Proteinreinigung, zur Entfernung von Pyrogenen, Nukleinsäurefragmenten und viralen Partikeln aus diesen Proteinen verwendet werden sollen, wobei die Membranen im allgemeinen aufreißfesten Trägern aufgebracht sind.

11. Verwendung nach den Ansprüchen 1 und 2, wobei die Matrices aus Monomeren mit der Formel (I) erhältlich sind, entweder durch chemische oder durch Photo(co)polymerisation (z.B. mit Riboflavin, oder mit Methylenblau in Gegenwart des Red-Ox-Paars Na-Toluolsulfinat und Diphenyliodoniumchlorid).

12. Verwendung von Acrylamiden mit der Formel (I) wie in Anspruch 1 beschrieben zur Herstellung von vorgefertigtem Gel für die Langzeitlagerung, das verwendet werden soll in allen elektrokinetischen Methodologien (einschließlich üblichem IEF und immobilisierten pH-Gradienten), wobei die Gel-Matrices entweder in Gegenwart von Lösungsmittel oder getrocknet gelagert werden.

13. Verwendung von Acrylamiden der Formel (I) wie in Anspruch 1 beschrieben zur Herstellung von chromatographischen Perlen, entweder allein oder als Beschichtung von Kunststoff- oder Glasperlen, oder gemischt mit Agarose oder weiteren Polymeren.

14. Aus Poly(N-substituierten)acrylamiden hergestellte Matrices zur Verwendung in elektrophoretischen und chromatographischen Methoden, erhältlich durch (Co)polymerisation von Monomeren der Formel (I): 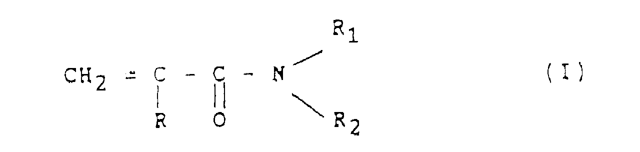 wobei R Wasserstoff oder CH₃ darstellt, während R₁ und R₂ unabhängig voneinander Wasserstoff oder eine Gruppe der Formel -(CH₂)ₙ-OH darstellen, wobei n = 3 oder > 3, unter der Voraussetzung, daß mindestens einer von R₁ und R₂ von Wasserstoff verschieden ist, oder durch Copolymerisation dieser Monomere mit weiteren (Meth)acrylamiden und mit der weiteren Voraussetzung, daß die Monomere der Formel (I) von 3-(N-Acryloyl)amino-1-propanol und 4-(N-Acryloyl)amino-1-butanol verschieden sind.

15. Verfahren zur Herstellung von Acrylamiden der Formel (I) nach Anspruch 14, dadurch charakterisiert, daß (Meth)acryloylchlorid und mindestens zwei Mol eines Aminoalkohols der Formel 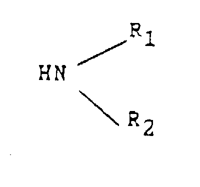 wobei R₁ und R₂ die obigen Bedeutungen haben, in absolutem Ethanol bei -30°C bis -70°C umgesetzt werden.

16. Verfahren nach Anspruch 15, wobei die Reaktionstemperatur -40°C ist.

## Revendications

1. Utilisation de matrices faites en poly(N-substitué) acrylamides dans des procédés électrophorétiques et chromatographiques, lesdites matrices pouvant être obtenues par (co)polymérisation de monomères de formule (I) : 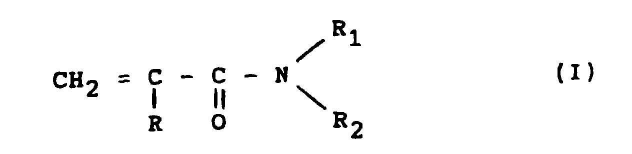 dans laquelle R représente un hydrogène ou CH₃, et R₁ et R₂, indépendamment l'un de l'autre, représentent un hydrogène ou un groupe de formule -(CH₂)ₙOH, où n=3 ou >3, avec la condition qu'au moins l'un parmi R₁ et R₂ soit différent de l'hydrogène, ou par copolymérisation desdits monomères avec d'autres (méth)acrylamides.

2. Utilisation selon la revendication 1, dans laquelle lesdites matrices peuvent être obtenues par polymérisation de 3-(N-acryloyl)amino-1-propanol et de 4-(N-acryloyl) amino-1-butanol, ou de leurs dérivés disubstitués, le 3-[N-(3-hydroxypropyl)-N-(acryloyl)]amino-1-propanol et le 4-[N-(4-hydroxypropyl)-N-(acryloyl)]amino-1-butanol, ou par copolymérisation desdits monomères avec des composés hydrophiles appropriés.

3. Utilisation selon les revendications 1 et 2, dans laquelle lesdits procédés comprennent toutes les séparations électrocinétiques, notamment l'électrophorèse de zone sur colonne capillaire.

4. Utilisation de monomères ayant la formule (I) comme décrit dans la revendication 1 pour revêtir la paroi interne d'un capillaire en électrophorèse capillaire, soit en utilisant des agents bifonctionnels conventionnels formant un pont -Si-O-Si (par exemple, le 3-méthacryloxypropyltriméthoxysilane) soit en utilisant des agents bifonctionnels formant une liaison -Si-C= directe, soit en utilisant du chlorure d'acryloyle, pour remplir un capillaire ou bien en tant que matrice réticulée, ou en tant que solution visqueuse en l'absence d'agent de réticulation.

5. Utilisation selon les revendications 1 et 2 dans laquelle lesdits procédés comprennent toutes les méthodes électrocinétiques, notamment le séquençage d'ADN, l'électrophorèse de zone sur colonne capillaire, soit en plaques soit en cylindres de gel, et pour déterminer le Mr de protéines par électrophorèse dans du dodécylsulfate de sodium, et pour toutes les méthodes de focalisation isoélectrique, notamment des gradients de pH immobilisés.

6. utilisation selon les revendications 1 et 2, dans laquelle lesdites matrices peuvent être obtenues par (co)polymérisation en présence de différents types de polymères hydrophiles aptes à induire une agrégation latérale et à former ainsi des structures macroporeuses.

7. Utilisation selon la revendication 1, dans laquelle lesdites matrices sont caractérisées par l'utilisation, en tant qu'agents d'agrégation latérale, de polymères de la famille du polyéthylèneglycol, en particulier ceux ayant des tailles de 10 et 20 kDa.

8. Utilisation de matrices selon les revendications 6 et 7, dans laquelle lesdits procédés comprennent tous types d'électrophorèse sur supports macroporeux, notamment la focalisation isoélectrique et les gradients de pH immobilisés conventionnels.

9. Utilisation selon les revendications 6 et 7 dans laquelle lesdites matrices sont utilisées en tant que membranes pour des procédés de chromatographie et de filtration, soit seules soit déposées sur d'autres membranes supports.

10. Utilisation selon les revendications 6 et 7 dans laquelle lesdites matrices sont utilisées en tant que membranes isoélectriques et de tamponnage à utiliser dans des électrolyseurs à multicompartiments pour purifier des protéines, pour éliminer un pyrogène, des fragments d'acide nucléique et des particules virales desdites protéines, lesdites membranes étant en général déposées sur des supports résistants à la déchirure.

11. Utilisation selon les revendications 1 et 2, dans laquelle lesdites matrices peuvent être obtenues par (co)polymérisation chimique ou photo (par exemple avec de la riboflavine, ou avec du bleu de méthylène en présence du couple d'oxydoréduction toluènesulfinate de Na et chlorure de diphényliodonium) de monomères ayant la formule (I).

12. Utilisation d'acrylamides ayant la formule (I) selon la revendication 1, pour préparer un gel précoulé à conserver à long terme, à employer dans toutes les méthodes électrocinétiques (notamment la focalisation isoélectrique (IEF) et les gradients de pH immobilisés conventionnels), lesdites matrices de gel étant stockées soit en présence d'un solvant soit séchées.

13. Utilisation d'acrylamides de formule (I) selon la revendication 1, pour préparer des perles chromatographiques, soit seuls ou sous la forme d'un revêtement de perles de matière plastique ou de verre, soit mélangés avec de l'agarose ou d'autres polymères.

14. Matrices faites en poly(N-substitué)acrylamides à utiliser dans des procédés électrophorétiques et chromatographiques, pouvant être obtenues par (co)polymérisation de monomères de formule (I) : 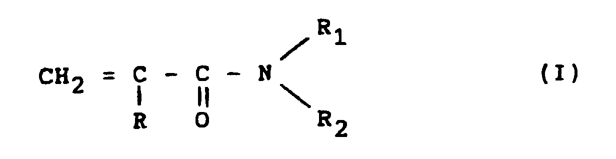 dans laquelle R représente un hydrogène ou CH₃, et R₁ et R₂, indépendamment l'un de l'autre, représentent un hydrogène ou un groupe de formule -(CH₂)ₙOH, où n=3 ou >3, avec la condition qu'au moins l'un parmi R₁ et R₂ soit différent de l'hydrogène, ou par copolymérisation desdits monomères avec d'autres (méth)acrylamides, et avec la condition supplémentaire que les monomères de formule (I) ne soient pas le 3-(N-acryloyl)amino-1-propanol, ni le 4-(N-acryloyl) amino-1-butanol.

15. Procédé pour la préparation d'acrylamides de formule (I) selon la revendication 14, caractérisé en ce qu'on fait réagir du chlorure de (méth)acryloyle et au moins 2 moles d'un amino-alcool de formule 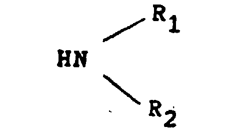 dans laquelle R₁ et R₂ ont les significations précitées, dans de l'éthanol absolu à -30 °C jusqu'à -70 °C.

16. Procédé selon la revendication 15, dans lequel la température de réaction est de -40 °C.
